# EUROPÄISCHE PATENTSCHRIFT

(11) **EP 1 262 615 B1**
(45) Veröffentlichungstag und Bekanntmachung des Hinweises auf die Patenterteilung: **02.03.2005**
(21) Anmeldenummer: 02008433.1
(22) Anmeldetag: 13.04.2002
(51) Int. Cl.: E05B 7/00, E05B 65/12

(54) **Türaussengriff-Bausatz, insbesondere für Fahrzeuge**
Outer door handle assembly, in particular for vehicles
Ensemble de poignée extérieure, notamment pour véhicules

(30) Priorität: 29.05.2001 DE 10126045
(43) Veröffentlichungstag der Anmeldung: 04.12.2002
(73) Patentinhaber: Huf Hülsbeck & Fürst GmbH & Co. KG, 42551 Velbert (DE)
(72) Erfinder: Mönig, Stefan, 58332 Schwelm (DE)
(74) Vertreter: Mentzel, Norbert, Dipl.-Phys.

(56) Entgegenhaltungen:
- DE-A- 3 030 519
- DE-A- 3 343 443
- DE-A- 19 940 379
- GB-A- 2 343 218

## Beschreibung

Die Erfindung richtet sich auf einen Türaußengriff-Bausatz der im Oberbegriff des Anspruches 1 angegebenen Art. In diesem Fall besteht der Bausatz aus zwei zunächst voneinander getrennten Bauteilen, nämlich aus einem türinnenseitig zu befestigenden Träger und aus einem Türgriff. Nach der Befestigung des Trägers wird der Griff von der Türaußenseite aus am Träger montiert und behält demgegenüber eine schwenkbare Lagerung. An seinem einen Ende besitzt der Griff einen, bei dieser Montage durch einen Ausschnitt im Türblech steckbaren Schaft.

Bei dem bekannten Bausatz dieser Art (DE 30 30 519 C2) ist der Griff als Ziehgriff ausgebildet und erhält an seinem dem Schaft gegenüberliegenden Ende eine Schwenklagerung am Träger. Der Schaft des montierten Griffs durchgreift den befestigten Träger und wirkt mit auf der Türinnenseite vorgesehenen Schlosshebeln zusammen.

Es ist bereits im Dokument DE 199 40 379 A1 vorgeschlagen worden, auch den Schaft zur Lagerung des Griffs am Träger zu nutzen. In diesem Fall ist der Griff über zwei Lagerstellen am Träger verbunden und nach seiner Montage demgegenüber um eine horizontale bzw. geneigte Achse klappbeweglich. Dazu ist der Träger als Baueinheit mit einem daran schwenkbaren Lagerarm verbunden. Der Lagerarm besitzt eine Kupplungsaufnahme für einen am Schaftende vorgesehenen Kupplungsstecker. Im Eingriffsbereich zwischen der Kupplungsaufnahme und dem Kupplungsstecker ist eine Arretierung vorgesehen, die von einem Loch im Türfalz aus zugänglich ist. Im Arretierungsfall wird der Kupplungseingriff gesichert und daher eine unerwünschte Demontage verhindert.

In manchen Anwendungsfällen befinden sich im Kupplungsbereich zwischen Griff-Schaftende und Lagerarm Bauteile, welche die Arretierungsmittel unzugänglich machen. Solche Bauteile können z.B. aus einem Schließzylinder im Träger oder aus ihn ersetzenden Blind-Einsätzen bestehen. In diesen Fällen konnte die vorteilhafte Kupplungsmontage zwischen dem Griffschaft und dem trägerseitigen Lagerarm nicht angewendet werden.

Der Erfindung liegt die Aufgabe zugrunde, einen universell verwendbaren Bausatz zu entwickeln, der eine solche Kupplungsmontage auch in den vorgenannten ungünstigen Fällen ohne weiteres ermöglicht. Dies wird erfindungsgemäß durch die im Anspruch 1 angeführten Maßnahmen erreicht, denen folgende besondere Bedeutung zukommt.

Diese Arretierung der Rastmittel kann in Abstand von den Kupplungsstellen angeordnet sein. Man wählt dabei einen Abstand, der ausreichend groß bemessen ist, um einen Zugang vom seitlichen Loch im Türfalz zu gewährleisten. Auf dieser Weise können Hindernisse im Bereich des Trägers, wie z.B. Schließzylinder, nicht mehr den Zugang zur Arretierung behindern. In vorteilhafter Weise lassen sich die Rastmittel wie folgt gestalten.

Bei der Erfindung wird der Kupplungseingtiff zwischen dem griffseitigen Schaftende und dem trägerseitigen Lagerarm durch Rastmittel vorgesichert, welche beim Kuppeln und Entkuppeln leicht überwindbare Rastkräfte erzeugen und die definierte Kupplungslage vorläufig bestimmen. Diese vorläufige Kupplungslage kann durch ein Hindernis arretiert werden, welches die während des Kuppeln und Entkuppelns ablaufende Rastbewegung der Rastmittel nach vollzogener Kupplung blockiert.

Diese Rastmittel bestehen aus einem am Lagerarm beweglichen Rastglied, welches federbelastet ist und - im Kupplungsfall - mit seiner Raststelle in eine Gegenraststelle hineinragt, die sich im Bereich des Kupplungssteckers befindet. Dann ist es lediglich erforderlich, dass vorerwähnte Hindernis in den Rückfederungsweg des Rastglieds zu verstellen, um den Rasteingriff des Rastglieds im Kupplungsstecker zu arretieren.

Weitere Maßnahmen und Vorteile der Erfindung sind aus den Unteransprüchen, der nachfolgenden Beschreibung und den Zeichnungen zu ersehen. In den Zeichnungen ist die Erfindung in einem Ausführungsbeispiel dargestellt. Es zeigen:
- Fig. 1 + 2: die vordere bzw. hintere perspektivische Ansicht einer Baueinheit, die aus einem Griff mit einer daran vormontierten Muldenschale besteht,
- Fig. 3: die Rückansicht eines der Baueinheit von Fig. 1 und 2 zugeordneten Trägers, vor dessen Befestigung an der Türinnenseite der Türaußenverkleidung,
- Fig. 4,: in leicht perspektivischer, aus Platzgründen mittig ausgebrochenen Draufsicht, die beiden Baugruppen aus Fig. 1, 2 einerseits und Fig. 3 andererseits nach vollzogener Montage, wobei der Verlauf eines dazwischen liegenden Türblechs mit einer Strich-Doppelpunkt-Linie angedeutet ist,
- Fig. 5: in einem Querschnitt längs der Schnittlinie V - V durch den kombinierten Bausatz von Fig. 4 die Anfangsphase der Kupplungsbewegung seiner beiden Bauteile, wobei störende weitere Elemente im Bausatz weggelassen worden sind,
- Fig. 6: einen Längsschnitt entlang der Schnittlinie VI - VI von Fig. 5 durch einen am Träger gelagerten Lagerarm, wobei weitere Elemente weggelassen worden sind,
- Fig. 7 + 8,: in einer der Fig. 5 und 6 entsprechenden Schnittdarstellung, die Bauteile nach Abschluss des Kupplungsvorgangs, wenn sich der Lagerarm noch in seiner Montagestellung befindet und
- Fig. 9 + 10,: in analogen Schnitten die Ruhestellung des Griffs am befestigten Träger, wo der Kupplungseingriff der beiden Bauteile durch eine Arretierung gesichert ist.

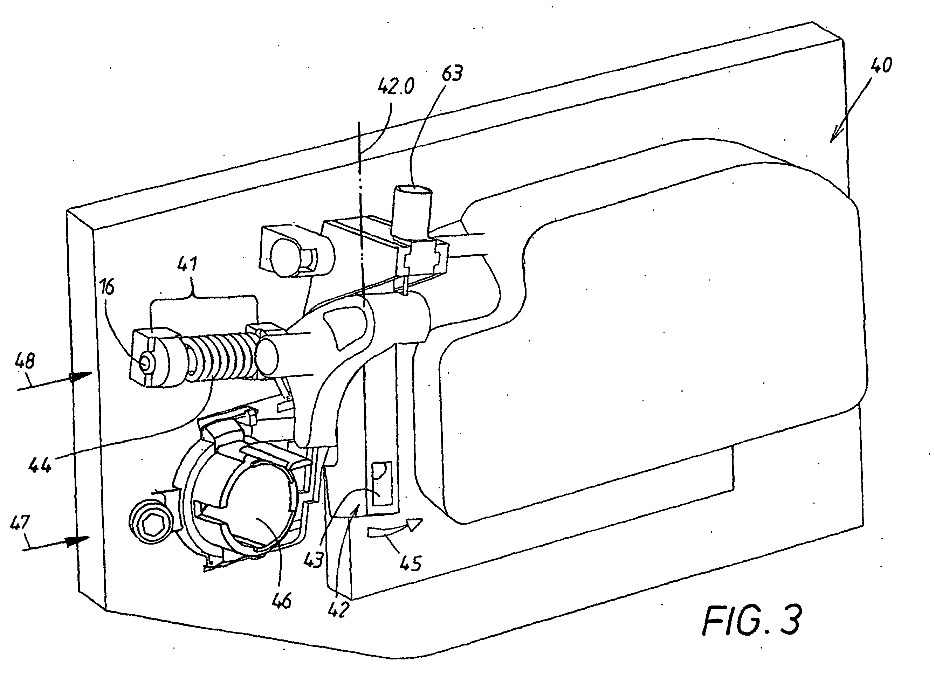

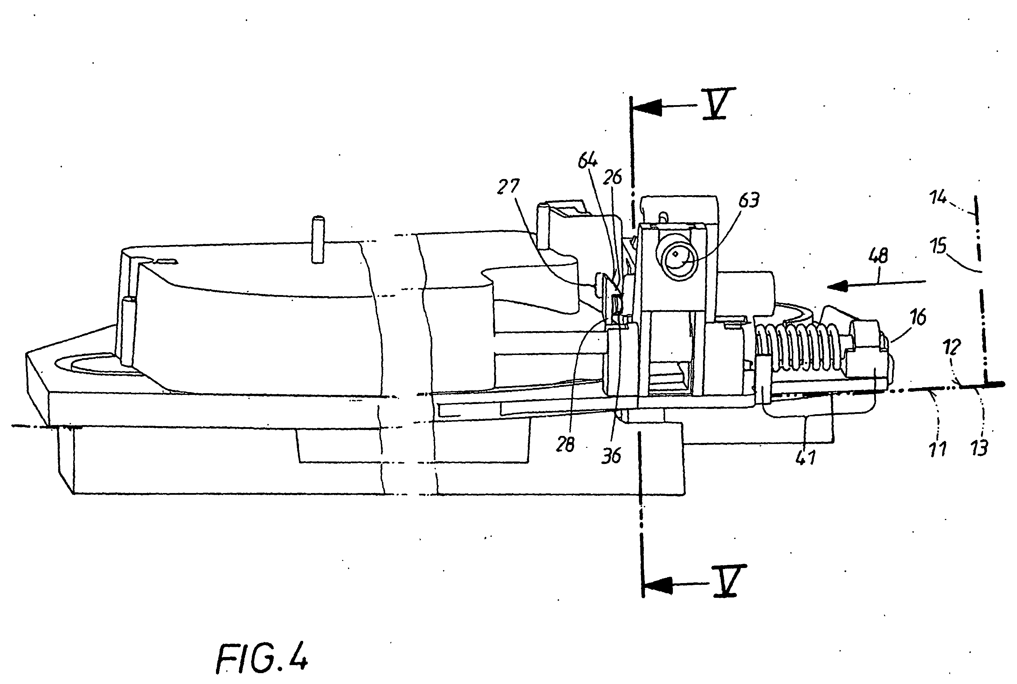

Der Bausatz für einen Türaußengriff umfasst einerseits eine vormontierte Baueinheit 10, die von der Türaußenseite 11 eines in Fig. 4 angedeuteten Türaußenverkleidung 13 montiert wird. An der gegenüberliegenden Türinnenseite 12 ist vorausgehend ein aus Fig. 3 erkennbarer Träger 40 befestigt, der seinerseits eine Baugruppe aus mehreren vormontierten Elementen umfasst, von denen nur die wichtigsten erwähnt werden sollen.

Diese Träger-Baugruppe 40 umfasst eine erste federbelastete Lagerstelle 41 für einen daran schwenkbar gelagerten Lagerarm 42. Der Lagerarm 42 besitzt eine Kupplungsaufnahme 43. Eine im Lagerbereich 41 vorgesehene Rückstellfeder 44 sorgt für eine im Sinne des Kraftpfeils 45 von Fig. 3 wirkende Federbelastung 45 des Lagerarms 42. Die Schwenkbewegung des Lagerarms kann durch nicht näher gezeigte Endanschläge begrenzt werden. In Fig. 3 ist zwecks besseren Sichtbarkeit jene Stellung 42.0 des Lagerarms 42 gezeigt, welche die Ruhelage eines zu der anderen Baueinheit 10 gehörenden Griffs 20 kennzeichnet.

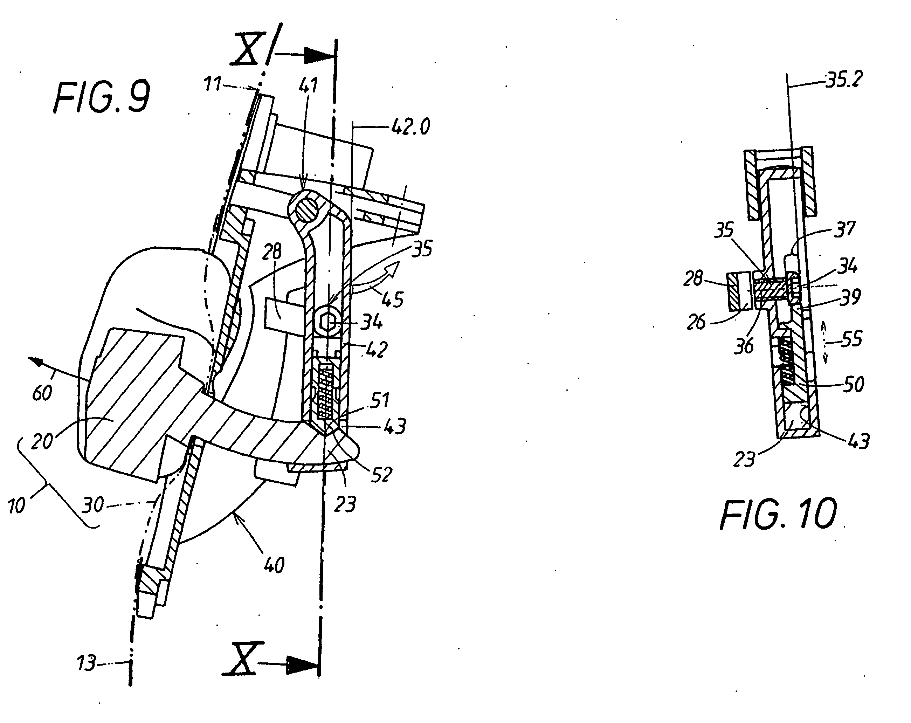

Die Baueinheit 10 umfasst eine Muldenschale 30, die im Handhabungsbereich 21 des damit vormontierten Griffs 20 verläuft. Die Muldenschale 30 deckt im Montagefall einen nicht näher gezeigten Ausbruch in der Türaußenverkleidung 13 ab und kommt dabei an der Türaußenseite 11 der in Fig. 9 als Doppelpunkt-Strich-Linie verdeutlichten Türaußenverkleidung 1-3 in eine bündige Lage mit dem Träger 40. Diese bündige Lage der Muldenschale 30 wird durch nicht näher gezeigte Haltemittel gegenüber dem Träger 40 gesichert. Die Muldenschale 30 ist mit einer Abdeckung 31 versehen, die in konformer Abstimmung mit dem Griff 20 verläuft und einen Durchbruch 33 aufweist. Nach der Montage ist dieser Durchbruch 33 in Ausrichtung mit einem nicht näher gezeigten Schließzylinder, der in einer aus Fig. 3 erkennbaren Zylinderaufnahme 46 des Trägers 40 montiert ist.

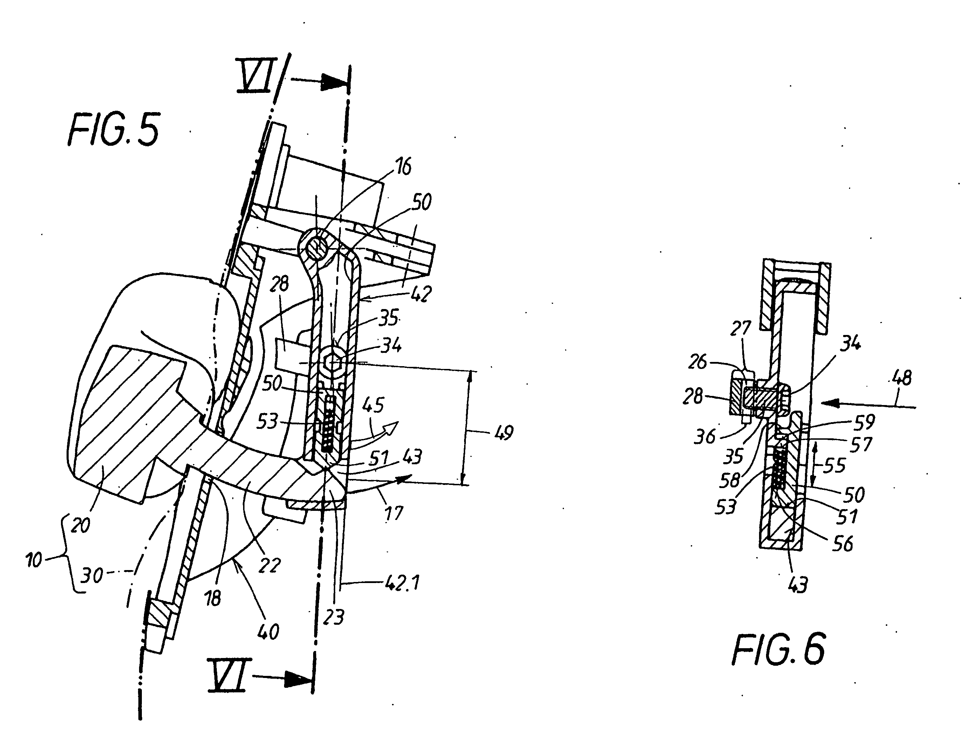

Dieser bei 46 im Träger 40 montierte Schließzylinder deckt die im Bereich der Kupplungsaufnahme 43 liegenden Bereiche des Lagerarmes 42 ab, weshalb von der Schmalseite des Trägers 40 aus eine durch den Pfeil 47 in Fig. 3 verdeutlichten Handhabungen im Bereich des Lagerarms 42 nicht ausführbar sind. Handhabungen in einem durch den Pfeil 48 in Fig. 3 verdeutlichten Bereich sind aber möglich, wenn sich der trägerseitige Lagerarm 42 in einer besonderen, aus Fig. 5 ersichtlichen Montagestellung befindet, die dort mit einer Hilfslinie 42.1 gekennzeichnet ist. Diese Handhabung 48 erfolgt, wie Fig. 4 und 6 verdeutlicht, mittels eines Werkzeugs durch ein Loch 15 im Türfalz 14 der Türaußenverkleidung 13. Wenn die Montagestellung 42.1 von Fig. 5 vorliegt dann ist, wie aus der Schnittansicht von Fig. 6 hervorgeht, das Betätigungsende 34 einer Stellschraube 35 zugänglich, welche mehrfache, noch näher zu beschreibende Funktionen zu erfüllen hat.

Die erste Funktion der Stellschraube 35 besteht darin die vorerwähnte Montagestellung 42.1 des Lagerarms 42 gemäß Fig. 5 und 6 zu sichern. Die Lagerstelle 41 des Lagerarms 42 ist durch einen auch in Fig. 3 erkennbaren Lagerbolzen 16 definiert. Wie bereits erwähnt wurde, wirkt auf den Lagerarm 42 die auch in Fig. 5 verdeutlichte Federkraft 45, die normalerweise bestrebt ist, den Lagerarm in die bereits erwähnte durch eine entsprechende Hilfslinie 42.0 in Fig. 9 verdeutlichte Ruhestellung zu überführen. Die Stellschraube 35 hat aber einen ersten Schraubenabschnitt 36, der mit einem am besten aus Fig. 6 erkennbaren ortsfesten Vorsprung 26 zusammenwirkt, der zum Träger 40 gehört. Diese Situation ist auch aus der Draufsicht von Fig. 4 zu erkennen, wobei störende Elemente weggelassen worden sind. Der Vorsprung 26 besteht aus dem hinterschnittenen Kopf 27 eines Hakens 28, der am Träger 40 sitzt. In der Montagestellung 42.1 des Lagerarms 42 liegt also der Schraubenabschnitt 36 federnd an dem Hinterschnitt 26 des Hakenkopfs 27 an.

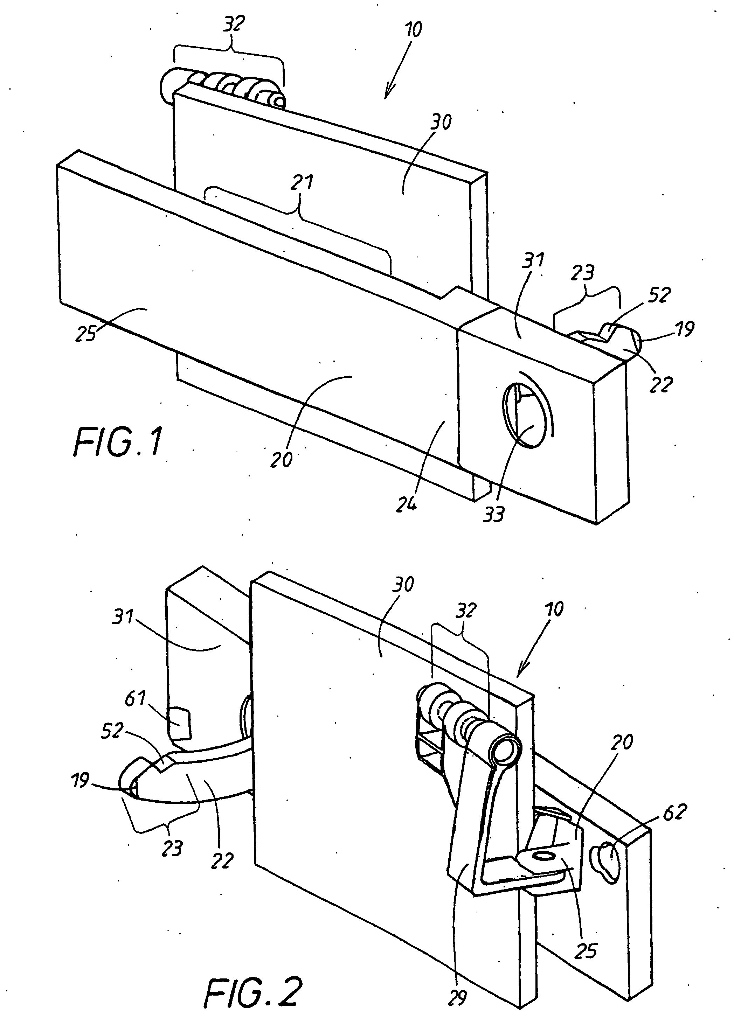

Wie Fig. 1 und 2 zeigen besitzt der Griff 20 an seinem einen Griffende 24 einen in seiner Schwenkbewegungs-Richtung verlaufenden Schaft 22. Das gegenüberliegende andere Griffende 25 ist, wie Fig. 2 besonders gut zeigt, über einen Verlängerungsarm 29 an der bereits erwähnten zweiten Lagerstelle 32 angelenkt, die sich an der Rückseite der Muldenschale 30 befindet. Dadurch entsteht der Zusammenhalt zwischen Griff 20 und Muldenschale 30 in der Baueinheit 10. Wie aus Fig. 2 weiterhin zu entnehmen ist, durchragt der Schaft 22 eine Ausnehmung in der Muldenschalen-Abdeckung 31 und steht auf der Rückseite der Muldenschale 30 heraus. Bei der Montage des Griffs 20 wird die gesamte Baueinheit 10 gehandhabt, was anhand der Fig. 5 bis 10 näher beschrieben wird.

Während die zweite Lagerstelle 32 für den Griff 20 in der Baueinheit 10 bereits vorliegt, ist im Ausgangsfall gemäß Fig. 3 die für den Griff 20 bestimmte erste Lagerstelle 41 zunächst unwirksam, weil sie im vorliegenden Fall in den Träger 40 integriert ist. Diese erste Lagerstelle 41 kommt aber mit dem Griff 20 durch eine Kupplung zur Wirkung, deren Anfangsphase in Fig. 5 und 6 verdeutlicht ist. Dazu wird die Baueinheit 10 so gehandhabt, dass der Griffschaft 22 durch ein Loch 18 im Träger 40 hindurchgeführt wird, im Sinne der durch den Bewegungspfeil 17 von Fig. 5 verdeutlichten Einsteckbewegung. Bei diesem Einstecken 17 fährt das Schaftende 23 ins Innere der Kupplungsaufnahme 43 vom trägerseitigen Lagerarm 42 ein. Das Schaftende 23 erweist sich somit als "Kupplungsstecker", der mit geeigneten Einführschrägen 19 an seiner Spitze versehen ist.

Bei dieser Einsteckbewegung 17 wirkt der Kupplungsstecker 23 mit einem Rastglied 50 zusammen. Das Rastglied 50 ist im Lagerarm 42 beweglich angeordnet und durch eine Feder 53 belastet. Das Rastglied 50 ist aufgrund seiner Federbelastung 53 bestrebt, mit seiner wirksamen Raststelle 51 in die Kupplungsaufnahme 43 vom Lagerarm 42 einzudringen. Das Rastglied besteht im vorliegenden Fall aus einem Schieber 50, der in einer in Richtung des Lagerarms 42 verlaufenden Führung 54 im Sinne des aus Fig. 6 erkennbaren Pfeils 55 längsbeweglich ist. Die Federbelastung kommt von einer gewendelten Druckfeder, welche einerends an einer mitbeweglichen Schulter 56 und anderends an einer im Lagerarm 42 ortsfesten Schulter 47 sich abstützt. Die maximale Einschubposition der Raststelle 51 in der Kupplungsaufnahme 43 ist durch einen mit dem Schieber 50 mitbeweglichen Anschlag 58 bestimmt, der sich in diesem Fall an einen ortsfesten Gegenanschlag 59 am Lagerarm 42 abstützt.

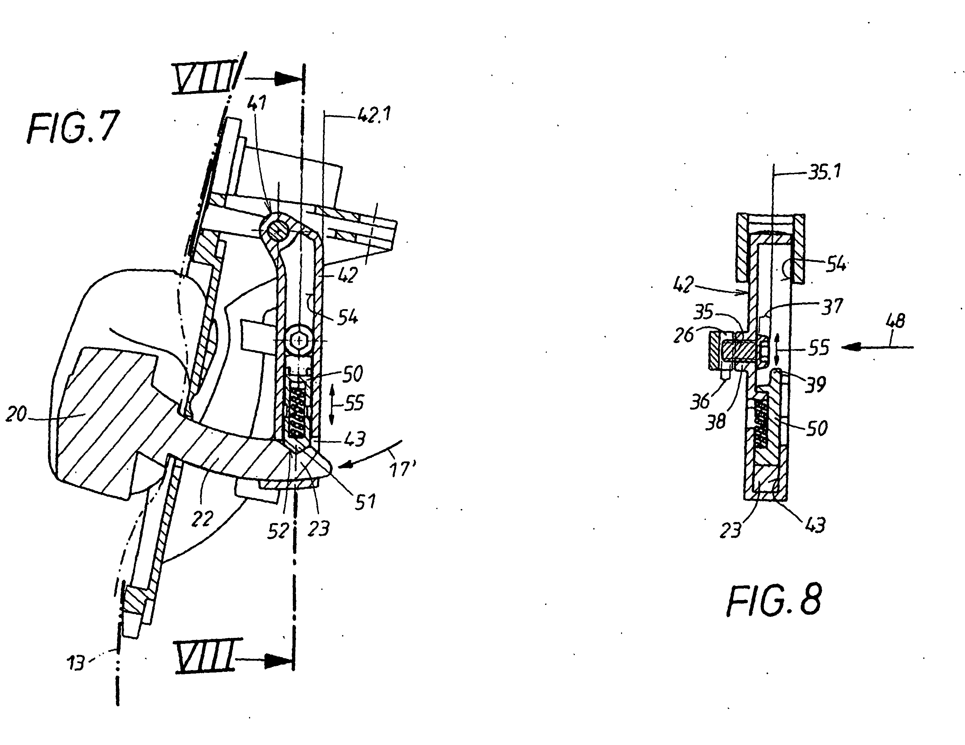

Fig. 7 und 8 zeigt die Kupplungsposition zwischen der armseitigen Kupplungsaufnahme 43 und dem am Schaft 22 befindlichen Kupplungsstecker 23. Diese ist dadurch bestimmt, dass die schieberseitige Raststelle 51 mit einer schaftseitigen Gegenraststelle 52 in Eingriff kommt. Im vorliegenden Fall sind die Raststelle 51 als Rastvorsprung und die Gegenraststelle 52 als Rastvertiefung ausgebildet. Beim vorerwähnten Kuppeln 17 fährt der Rastvorsprung 50 über die vor der Rastvertiefung 52 im Schaft befindliche Erhöhung, weshalb der Schieber 50 die beschriebene Längsbewegung 55 in seiner Führung 54 ausführt. Dies ist aber nur deswegen möglich, weil, wie Fig. 8 erkennen lässt, ein kopfseitiger zweiter Schraubenabschnitt 37 der Stellschraube 35 außerhalb des Bewegungspfads 55 eines abgesetzten Schieberendes 39 ist. Die Stellschraube 35 ist in einer Gewindeaufnahme 38 des Lagerarms 42 aufgenommen. Dabei ist die Stellschraube 35 zwischen zwei Endpositionen verstellbar, von denen die eine, in Fig. 8 mit der Hilfslinie 35.1 gekennzeichnet, beim Kuppeln 17 bzw. gegensinnigen Entkuppeln des Griffs 20 vorliegt und, aus später noch näher ersichtlichen Gründen mit "Dearretierposition" bezeichnet werden soll. Diese Dearretierposition 35.1 bestimmt zugleich die vorerwähnte Montagestellung 42.1 des Lagerarms 42. Diese entsteht durch den bereits beschriebenen Hintergriff des ersten Schraubenabschnitts 36 an einem ortsfesten Vorsprung 26.

Nach erfolgter Kupplung des schaftseitigen Kupplungssteckers 23 in der armseitigen Kupplungsaufnahme 43 gemäß Fig. 7 und 8 wird die Montagestellung 42.1 aufgehoben. Dies geschieht durch die aus Fig. 9 und 10 ersichtlichen Maßnahmen. Diese bestehen darin, dass, wie bereits beschrieben wurde, ausgehend von der Montagestellung 42.1 von Fig. 7 und 8 ein Werkzeug durch das Loch 15 im Türfalz 14 von Fig. 4 im Sinne des Pfeils 48 hindurchgeführt wird und das Betätigungsende 34 der Stellschraube 35 trifft. Dann lässt sich mittels des Werkzeugs die Stellschraube 35 in ihre aus Fig. 10 ersichtliche, durch die Hilfslinie 35.2 gekennzeichnete zweite Position überführen. Dann ist der Schraubenabschnitt 36 so weit weggeschraubt, dass die Stellschraube 35 den Hinterschnitt 26 des Hakens 28 nicht mehr hintergreift. Dann ist der Lagerarm 42 frei und wird aufgrund der beschriebenen, auf ihn wirkenden Federbelastung 45 in die durch die bereits erwähnte Hilfslinie 42.0 gekennzeichnete Ruhestellung von Fig: 9 überführt. Der Griff 20 ist dann maximal eingefahren und wird durch Endanschläge in dieser Ruhelage festgehalten. Die Muldenschale 30 der zum Griff 20 gehörenden Baueinheit 10 ist in ihre endgültige Lage gelangt, wo sie durch Befestigungsmittel an den in Fig. 2 mit 61 und 62 gekennzeichneten Stellen am Träger 40 festgelegt werden kann. Dann liegt die endgültige Befestigungslage der Baueinheit 10 an der Türaußenseite 11 vor. Der Griff ist dann nicht nur um seine schalenseitige Lagerstelle 32 von Fig. 2, sondern über den Lagerarm 42 auch um seine trägerseitige Lagerstelle 41 verschwenkbar..

Beide Lagerstellen 32, 41 bestimmen die Schwenkachse des Griffs 20. Dann kann der Griff 20 gegenüber der ruhenden Muldenschale 30 und dem Träger 40 im Sinne des Betätigungspfeils 60 von Fig. 9 gehandhabt werden. Bei dieser Betätigung 60 wird der mit dem Griff 20 gekuppelte Lagerarm 42 in eine nicht näher gezeigte Arbeitsstellung verschwenkt. Diese Schwenkbewegung des Lagerarms 42 wird über einen Hebel auf ein Gestänge übertragen, welches an der mit 63 in Fig. 3 und 4 gekennzeichneten Stelle angreift. Das Gestänge besteht im vorliegenden Fall aus einem an der Angriffstelle 63 angeschlossenen Bowdenzug, der zu nicht näher gezeigten Schlossgliedern führt. Diese werden bei der Betätigung 60 freigegeben. Die Tür kann geöffnet werden.

In der Ruhestellung 42.0 des Lagerarms 42 kann das Betätigungsende 34 der Stellschraube 35 nicht mehr ohne weiteres durch das erwähnte Loch 15 im Türfalz 14 zugänglich. Darüber hinaus hat die Stellschraube 35 in ihrer dabei vorliegenden Position 35.2 die weitere Funktion, den Kupplungseingriff des Steckers 43 in der armseitigen Aufnahme 43 zu arretieren. Deswegen soll diese Position 35.2 der Stellschraube 35 als "Arretierposition" bezeichnet werden. Dies geschieht dadurch, dass der kopfseitige Schraubenabschnitt 37, gemäß Fig. 10, in den durch den gepunkteten Pfeil 55 verdeutlichten Bewegungspfad des Schiebers 50 kommt. Dies geschieht, indem der Schraubenkopf das abgesetzte obere Schieberende 39 hintergreift. Der Schieber 50 ist blockiert und daher der Eingriff des Rastvorsprungs 51 in der Rastvertiefung 52 gesichert.

Sofern auch in der Ruhestellung 42.0 das Betätigungsende 34 der Stellschraube 35 vom Türfalz-Loch 15 aus zugänglich sein sollte, ist dies für die Einleitung einer einfachen Demontage des Griffs 20 interessant. Dann kann man nämlich, ausgehend von der in Fig. 10 ersichtlichen Ruhestellung 42.0 die Stellschraube 35 bereits so weit verstellen, dass sie aus ihrer Arretierposition 35.2 in Fig. 10 in ihre aus Fig. 8 ersichtliche Dearretierposition 35.1 gelangt. Dann kommt der Schraubenabschnitt 35 zwar wieder in seine aus Fig. 6 und 8 ersichtliche Ausfahrposition, hintergreift aber in dieser Ruhestellung 42.0 von Fig. 9 und 10 noch nicht den vorbeschriebenen, aus Fig. 4 ersichtlichen Hakenkopf 27. Der auch in Fig. 4 erkennbare Schraubenabschnitt 36 -liegt dann noch oberhalb des dortigen Hakenkopfs 27. Dieser Hakenkopf ist aber mit einer Auflaufschräge 64 versehen und der zugehörige Schaft des Hakens 28 federnd elastisch. Zieht man dann den Griff 20 etwas im Betätigungssinne gemäß Pfeil 60 von Fig. 9, so fährt der vorstehende Schraubenabschnitt 36 in Fig. 4 über die Auflaufschräge 64 des Hakenkopfs 27, schnappt hinter den Hinterschnitt 26 des Hakens und gelangt in die aus Fig. 4 ersichtliche Position. Dann liegt aber wieder die Montagestellung 42.1 des Lagerarms gemäß Fig. 7 und 5 vor. Dann ist ein Entkuppeln des schaftseitigen Steckers 23 aus der armseitigen Kupplungsaufnahme 43 im Sinne des Herauszieh-Pfeils 17' von Fig. 7 möglich. Ursache dafür ist wieder, die freie Längsverschieblichkeit 55 des Schiebers 50. Der in Fig. 9 und 10 noch als Hindernis wirkende Schraubenkopf 37 befindet sich jetzt wieder in seiner Dearretierposition 35.1 von Fig. 8. Diese Position 35.1 ist durch Anlage des Schraubenkopfs 37 am Boden der Schieberführung 54 definiert. Das abgesetzte Schieberende 39 ist freigegeben.

### Bezugszeichenliste:

- 10: Baueinheit (Fig. 1, 2)
- 11: Türaußenseite (Fig. 4)
- 12: Türinnenseite (Fig. 4)
- 13: Türaußenverkleidung
- 14: Türfalz (Fig. 4)
- 15: Loch in 14 (Fig. 4)
- 16: Lagerbolzen für 41 (Fig. 3)
- 17: Pfeil der Steckbewegung von 23, Kupplungsbewegung (Fig. 5)
- 17': Auszugsbewegung von 23, Entkuppeln
- 18: Loch in 40 für 22 (Fig. 5)
- 19: Einführschräge an 23 (Fig. 1)
- 20: Griff
- 21: Handhabungsbereich von 20
- 22: Schaft an 20
- 23: Schaftende, Kupplungsstecker (Fig. 5)
- 24: erstes Griffende von 20 (Fig. 1)
- 25: zweites Griffende von 20 (Fig. 1)
- 26: ortsfester Vorsprung für 36, Hinterschnitt (Fig. 6)
- 27: Hakenkopf (Fig. 4, 6)
- 28: Haken, Hakenschaft (Fig. 4)
- 29: Verlängerungsarm an 25 (Fig. 2)
- 30: Muldenschale von 10
- 31: Abdeckung an 30
- 32: zweite Lagerstelle für 20
- 33: Durchbruch in 31 (Fig. 1)
- 34: Betätigungsende von 35 (Fig. 6)
- 35: Arretiermittel, Stellschraube
- 35.1: Dearretierposition von 37 (Fig. 8)
- 35.2: Arretierposition von 37 (Fig. 10)
- 36: erster Schraubenabschnitt von 35
- 37: zweiter, kopfseitiger Schraubenabschnitt von 35, Schraubenkopf, Hindernis
- 38: Gewindeaufnahme für 35 in 32
- 39: abgesetztes Schieberende für 35
- 40: Träger, zweite Baugruppe
- 41: erste Lagerstelle für 42und 20
- 42: Lagerarm
- 42.1: Montagestellung von 42
- 42.0: Ruhestellung von 42
- 43: Kupplungsaufnahme in 42 für 23
- 44: Rückstellfeder für 42, 20
- 45: Kraftpfeil der Federbelastung von 42 (Fig. 3, 5, 9)
- 46: Zylinderaufnahme in 40 (Fig. 3)
- 47: Pfeil der Nichthandhabung (Fig. 3)
- 48: Pfeil der Handhabung von 35 (Fig. 3)
- 49: Versatz von 34 gegenüber 43 (Fig. 5)
- 50: Rastglied, Schieber
- 51: Raststelle an 50, Rastvorsprung (Fig. 7)
- 52: Gegenraststelle an 23, Rastvertiefung (Fig. 7)
- 53: Feder, Federbelastung von 50
- 54: Schieberführung in 42 für 50 (Fig. 5)
- 55: Pfeil der Längsverschiebung von 50, Bewegungspfad (Fig. 6)
- 56: mitbewegliche Schulter an 50 für 54 (Fig. 6)
- 57: ortsfeste Schulter an 42 für 54 (Fig. 6)
- 58: mitbeweglicher Anschlag an 50 (Fig. 6)
- 59: ortsfester Gegenanschlag (Fig. 6)
- 60: Betätigungspfeil von 20 (Fig. 9)
- 61: erste Befestigungsstelle von 30 an 40 (Fig. 2)
- 62: zweite Befestigungsstelle von 30 an 40 (Fig. 2)
- 63: Angriffsstelle für Gestänge (Fig. 3, 4)
- 64: Auflaufschräge an 27 für 36 (Fig. 4)

## Patentansprüche

1. Türaußengriff-Bausatz, insbesondere für Fahrzeuge, bestehend aus einem türinnenseitig (12) an einer Türaußenverkleidung (13) befestigbaren Träger (40)
und aus einem am befestigten Träger (40) von der Türaußenseite (11) aus montierbaren Griff (20),
welcher nach seiner Montage am Träger (40) schwenkbar gelagert ist und an seinem einen Griffende (24) einen durch einen Ausschnitt in der Türaußenverkleidung (13) steckbaren Schaft (22) aufweist,
wobei zur Lagerung des Griffs (20) bereits der Träger (40) einen schwenkbaren Lagerarm (42) mit einer Kupplungsaufnahme (43) besitzt,
wobei das Schaftende vom Griff (20) als ein bei der Griffmontage in die Kupplungsaufnahme (43) des Lagerarms (42) eingreifender Kupplungsstecker (23) ausgebildet ist
und dass im Kupplungsbereich des Kupplungssteckers (23) und der Kupplungsaufnahme (43) eine durch ein Loch (15) im Türfalz (14) der Türaußenverkleidung (13) zugängliche Arretierung (35) angeordnet ist, welche im Arretierungsfall den Kupplungseingriff (51, 52) sichert,
**dadurch gekennzeichnet**
**dass** am Lagerarm (42) ein bewegliches Rastglied (50) angeordnet ist, welches federbelastet (53) ist und eine Raststelle (51) besitzt,
**dass** der Kupplungsstecker (23) am Griff-Schaftende eine Gegenraststelle (52) für das Rastglied (50) aufweist
und **dass** die Arretierung aus einem verstellbaren Hindernis (37) besteht, welches im Arretierungsfall der Kupplung in den Rückfederweg des Rastglieds (50) hineinragt und das Rastglied (50) in seinem Rasteingriff (51, 52) im Kupplungsstecker (23) arretiert.

2. Bausatz nach Anspruch 1, **dadurch gekennzeichnet, dass** das Rastglied aus einem längsbeweglichen Schieber (50) besteht
und dass der Lagerarm (42) eine Führung (54) für den Schieber (50) besitzt.

3. Bausatz nach Anspruch 2, **dadurch gekennzeichnet, dass** die Führung (54) in Richtung des Lagerarms (42) verläuft.

4. Bausatz nach Anspruch 2 oder 3, **dadurch gekennzeichnet, dass** der Schieber (50) eine mitbewegliche Schulter (56) und der Lagerarm (42) eine armfeste Schulter (57) aufweisen, zwischen denen ein Federglied (53) angeordnet ist, welches eine Rastkraft auf den Schieber (50) ausübt.

5. Bausatz nach einem der Ansprüche 2 bis 4, **dadurch gekennzeichnet, dass** der Schieber (50) einen mitbeweglichen Anschlag (58) aufweist,
der aufgrund der Federbelastung (53) mit einem armfesten Gegenanschlag (59) zusammenwirkt und dadurch eine maximale Einschubposition seiner Raststelle (51) in der Kupplungsaufnahme (43) bestimmt.

6. Bausatz nach einem der Ansprüche 1 bis 5, **dadurch gekennzeichnet, dass** das arretierwirksame Hindernis (35, 37) am Lagerarm (42) sitzt und in Abstand (49) von der Kupplungsaufnahme (43) angeordnet ist.

7. Bausatz nach einem der Ansprüche 1 bis 6, **dadurch gekennzeichnet, dass** das Hindernis - außer seiner Arretierungswirkung für die Kupplung (23, 43) - zugleich die Funktion hat, den Lagerarm (42) in einer definierten Schwenkstellung, Montagestellung (42.1), zu fixieren,
und dass diese Montagestellung (42.1) des Lagerarms (42) die Montage (17) bzw. Demontage (17') des Griffs (20) gegenüber dem Träger (40) und/oder die Zugänglichkeit zum Hindernis (53, 37) vom Türfalz-Loch (15) optimiert sind.

8. Bausatz nach Anspruch 7, **dadurch gekennzeichnet, dass** das Hindernis (35, 37) zwischen zwei Endpositionen (35.1, 35.2) verstellbar ist,
nämlich einer Arretierposition (35.2) einerseits, wo zwar der Rasteingriff (51, 52) und damit der Kupplungseingriff gesichert sind, aber die Schwenkbewegung des Lagerarms (42) freigegeben sind,
und einer Dearretierposition (35.1) andererseits, wo zwar der Rasteingriff (51, 52) ungesichert und damit ein Kuppeln (17) und Entkuppeln (17') des Griffs (20) möglich sind, aber die Montagestellung (42.1) des Lagerarms (42) im Träger (40) fixiert ist.

9. Bausatz nach Anspruch 8, **dadurch gekennzeichnet, dass** der Lagerarm (42) eine Gewindeaufnahme (38) für eine Stellschraube (35) besitzt, die als Hindernis (37) fungiert,
und dass das eine Schraubenende (34) zur Schraubbetätigung dient und in der Montagestellung (42.1) vom Loch (15) im Türfalz (14) aus zugänglich ist.

10. Bausatz nach Anspruch 9, **dadurch gekennzeichnet, dass** die Stellschraube (35) einen ersten Schraubenabschnitt (36) aufweist,
welcher in einer die Dearretierposition (37.1) kennzeichnenden ersten Schraubposition mit einem Vorsprung (26) am Träger (40) zusammenwirkt und damit die Montagestellung (42.1) des Lagerarms (42) fixiert,
und dass die Stellschraube (35) einen zweiten Schraubenabschnitt (37) besitzt,
welcher in einer die Arretierposition (35.2) bestimmenden zweiten Schraubposition in den Bewegungsweg (55) des Rastglieds bzw. des Schiebers (50) hineinragt und die Kupplung (23, 43) von Griff (20) und Lagerarm (42) sichert.

11. Bausatz nach Anspruch 10, **dadurch gekennzeichnet, dass** der Lagerarm (42) in Richtung einer Anklappbewegung des Griffs (20) an die Türaußenverkleidung (13) kraftbelastet ist,
dass der Vorsprung (26) aus einem in Gegenrichtung zur Anklappbewegung hinterschnittenen Hakenkopf (27) besteht,
und dass der erste Schraubenabschnitt (36) in der ersten Schraubposition (35.1) der Stellschraube (35) den Hinterschnitt (26) hintergreift und die Montagestellung (42.1) des Lagerarms (42) bestimmt.

12. Bausatz nach einem der Ansprüche 1 bis 11, **dadurch gekennzeichnet, dass** die Betätigungsstelle des Hindernisses bzw. das Betätigungsende (34) der Stellschraube (35) nur in der Montagestellung (42.1) des Lagerarms (42) vom Loch (15) im Türfalz (14) aus zugänglich sind.

13. Bausatz nach einem der Ansprüche 1 bis 12, **dadurch gekennzeichnet, dass** dem Griff (20) im Handhabungsbereich (21) eine Muldenschale (30) zugeordnet ist, die im Befestigungsfall auf der Türaußenseite (11) liegt und im Träger (40) verankert ist,
dass der Griff (20) zwar mit der Muldenschale (30) eine vormontierte Baueinheit (10) bildet, aber gegenüber der am Träger (40) befestigten Muldenschale (30) der Griff (20) bei seiner Betätigung beweglich ist,
dass in der Baueinheit (10) der Griff (20) mit der Muldenschale (30) eine Lagerstelle (32) besitzt
und dass diese muldenseitige Lagerstelle (32) gegenüber der lagerarmseitigen Lagerstelle (41) sich am gegenüberliegenden Griffende (25) befindet.

14. Bausatz nach Anspruch 12, **dadurch gekennzeichnet, dass** die Muldenschale (30) eine Abdeckung (31) für einen im Träger (40) aufgenommenen (46) Schließzylinder besitzt.

## Claims

1. A kit for an external door handle, particularly for vehicles, consisting of a carrier (40) adapted to be fastened on the inside (12) of the door on an exterior door panel (13)
and a handle (20) adapted to be mounted on the fixed carrier (40) from the exterior (11) of the door,
which is pivotably supported, after being mounted on the carrier (40), and has, at one handle end (24), a shaft (22) configured to be inserted through a cut-out provided in the exterior door panel (13),
wherein the carrier (40) already has a pivotable bearing arm (42) with a coupling receptacle (43) for supporting the handle (20),
wherein the shaft end of the handle (20) is constructed as a coupling plug (23) engaging in the coupling receptacle (43) of the bearing arm (42) during mounting of the handle,
and in that in the coupling area of the coupling plug (23) and the coupling receptacle (43), a locking device (35) is provided which is accessible through a hole (15) in the door fold (14) of the exterior door panel (13), said locking device securing the coupling engagement (51, 52) when locked,
**characterised in that**, mounted on the bearing arm (42) is a movable locking member (50) which is spring loaded (53) and has a locking location (51),
**in that** the coupling plug (23) comprises at the shaft end of the handle a counter locking location (52) for the locking member (50)
and **in that** the locking device consists of an adjustable obstacle (37) which projects into the restoring path of the locking member (50) in the locking position of the coupling and locks the locking member (50) in locking engagement (51, 52) in the coupling plug (23).

2. Kit according to claim 1, **characterised in that** the locking member consists of a longitudinally movable slide (50)
and **in that** the bearing arm (42) has a guide (54) for the slide (50).

3. Kit according to claim 2, **characterised in that** the guide (54) extends in the direction of the bearing arm (42).

4. Kit according to claim 2 or 3, **characterised in that** the slide (50) comprises a shoulder (56) movable therewith and the bearing arm (42) comprises a stationary shoulder (57), between which is provided a spring member (53) which exerts a locking force on the slide (50).

5. Kit according to one of claims 2 to 4, **characterised in that** the slide (50) has a stop (58) movable therewith, which cooperates with a counter stop (59) of the bearing arm as a result of the spring bias (53) and thereby determines a maximum position of insertion of its locking location (51) in the coupling receptacle (43).

6. Kit according to one of claims 1 to 5, **characterised in that** the locking obstacle (35, 37) is located on the bearing arm (42) and is arranged at a spacing (49) from the coupling receptacle (43).

7. Kit according to one of claims 1 to 6, **characterised in that**, in addition to having a locking effect for the coupling (23, 43), the obstacle also has the function of fixing the bearing arm (42) in a defined pivoted position, the mounting position (42.1),
and that this mounting position (42.1) of the bearing arm (42) optimises the mounting (17) or demounting (17') of the handle (20) relative to the carrier (40) and/or access to the obstacle (53, 37) from the hole (15) in the door fold.

8. Kit according to claim 7, **characterised in that** the obstacle (35, 37) is movable between two end positions (35.1, 35.2),
namely a locking position (35.2) on the one hand, where the locking engagement (51, 52) and hence the coupling engagement are secured but the bearing arm (42) is free to pivot,
and an unlocking position (35.1) on the other hand where the locking engagement (51, 52) is unsecured and hence coupling (17) and uncoupling (17') of the handle (20) are possible but the mounting position (42.1) of the bearing arm (42) in the carrier (40) is fixed.

9. Kit according to claim 8, **characterised in that** the bearing arm (42) has a threaded receptacle (38) for an adjusting screw (35) which acts as an obstacle (37),
and **in that** one end (34) of the screw serves to actuate the screw and is accessible from the hole (15) in the door fold (14) in the mounting position (42.1).

10. Kit according to claim 9, **characterised in that** the adjusting screw (35) comprises a first screw section (36) ,
which cooperates with a projection (26) on the carrier (40) in a first screw position which determines the unlocking position (37.1), and thereby fixes the mounting position (42.1) of the bearing arm (42),
and **in that** the adjusting screw (35) has a second screw section (37),
which projects into the path of movement (55) of the locking member or of the slide (50) in a second screw position which determines the locking position (35.2), and secures the coupling (23, 43) of the handle (20) and bearing arm (42).

11. Kit according to claim 10, **characterised in that** the bearing arm (42) is force-loaded in a direction of a folding movement of the handle (20) against the exterior door panel (13),
**in that** the projection (26) consists of a hook head (27) which is undercut in a direction counter to the folding movement,
and **in that** the first screw section (36) engages the undercut (26) in a first screw position (35.1) of the adjusting screw (35) and determines the mounting position (42.1) of the bearing arm (42).

12. Kit according to one of claims 1 to 11, **characterised in that** the actuating position of the obstacle or the actuating end (34) of the adjusting screw (35) are accessible only in the mounting position (42.1) of the bearing arm (42) from the hole (15) in the door fold (14).

13. Kit according to one of claims 1 to 12, **characterised in that** the handle (20) is associated with a recessed shell (30) in the operating area (21), said recessed shell being located on the exterior side (11) of the door when mounted and is anchored in the carrier (40),
**in that** the handle (20) does indeed form a pre-assembled unit (10) with the recessed shell (30) but the handle (20) is movable when actuated relative to the recessed shell (30) fixed to the carrier (40),
**in that** in the unit (10), the handle (20) with the recessed shell (30) has a mounting point (32)
and that this mounting point (32) is located on the handle end (25) opposite the bearing point (41) nearest the bearing arm.

14. Kit according to claim 12, **characterised in that** the recessed shell (30) has a cover (31) for a locking cylinder accommodated (46) in the carrier (40).

## Revendications

1. Ensemble de poignée extérieure de portière, en particulier pour véhicules, formé d'un support (40), susceptible d'être fixé, du côté intérieur de portière (12), sur un revêtement extérieur de portière (13)
et d'une poignée (20) susceptible d'être montée, sur la face extérieure de portière (11), sur le support (40) ayant été fixé,
poignée qui, après son montage sur le support (40), est montée à pivotement et présente, sur une de ses extrémités de poignée (24), une tige (22) pouvant être enfichée dans une découpure ménagée dans l'habillage extérieur de portière (13),
où, pour assurer le montage en palier de la poignée (20), déjà le support (40) comprend un bras de palier (42) pouvant pivoter, avec un logement d'accouplement (43),
où l'extrémité de tige de la poignée (20) est réalisée sous forme d'élément d'accouplement mâle (23), s'engageant dans le logement d'accouplement (43) du bras de palier (42)
et en ce que, dans la zone d'accouplement de l'élément d'accouplement mâle (23) et du logement d'accouplement (43), est disposé un dispositif de blocage (35), accessible par un trou (15) ménagé dans la feuillure de portière (14) de l'habillage extérieur de portière (13), dispositif de blocage assurant l'engagement en accouplement (51, 52) en cas de blocage,
**caractérisé**
**en ce qu'**un organe d'encliquetage (50) mobile, sollicité par un ressort (53) et comprenant un point d'encliquetage (51), est disposé sur le bras de palier (42),
**en ce que** l'élément d'accouplement mâle (23) présente sur l'extrémité de tige de palier un point d'encliquetage conjugué (52) pour l'organe d'encliquetage (50),
et **en ce que** le dispositif de blocage est formé d'un obstacle (37) réglable, qui, en cas de blocage de l'accouplement, pénètre dans la course de rappel élastique de l'organe d'encliquetage (50) et bloque l'organe d'encliquetage (50) dans son engagement par encliquetage (51, 52) dans l'élément d'accouplement mâle (23).

2. Ensemble selon la revendication 1, **caractérisé en ce que** l'organe d'encliquetage est formé d'un coulisseau (50) mobile, longitudinalement,
et **en ce que** le bras de palier (42) comprend un guidage (54) pour le coulisseau (50).

3. Ensemble selon la revendication 2, **caractérisé en ce que** le guidage (54) s'étend dans la direction du bras de palier (42).

4. Ensemble selon la revendication 2 ou 3, **caractérisé en ce que** le coulisseau (50) présente un épaulement (56) mobile conjointement, et le bras de palier (42) présente un épaulement (57) fixé au bras, épaulements entre lesquels un organe élastique (53) est disposé et exerce une force d'encliquetage sur le coulisseau (50).

5. Ensemble selon l'une des revendications 2 à 4, **caractérisé en ce que** le coulisseau (50) présente une butée (58) déplaçable conjointement, qui, du fait de la sollicitation élastique (53), coopère avec une butée conjuguée (59) fixée au bras et détermine de ce fait une position d'enfoncement maximal de son point d'encliquetage (51) dans le mouvement d'accouplement (43).

6. Ensemble selon l'une des revendications 1 à 5, **caractérisé en ce que** l'obstacle (35, 37), agissant pour produire le blocage, est placé sur le bras de palier (42) et est disposé à distance (49) du logement d'accouplement (43).

7. Ensemble selon l'une des revendications 1 à 6, **caractérisé en ce que** l'obstacle - outre son effet de blocage pour l'accouplement (23, 43) - a en même temps comme rôle de fixer le bras de palier (42) à une position de pivotement définie, une position de montage (42.1),
et **en ce que** cette position de montage (42.1) du bras de palier (42) optimise le montage (17) ou le démontage (17') de la poignée (20) par rapport au support (40) et/ou l'accessibilité par rapport à l'obstacle (53, 37) du trou ménagé vis-à-vis de la feuillure de portière (15).

8. Ensemble selon la revendication 7, **caractérisé en ce que** l'obstacle (35, 37) est réglable entre deux positions finales (35.1, 35.2),
précisément, une position de blocage (35.2), d'une part, à laquelle, certes, l'engagement par encliquetage (51, 52) et, ainsi, l'engagement par accouplement est assuré, mais le mouvement pivotant du bras de palier (42) étant libéré,
et une position de déblocage (35.1), d'autre part, à laquelle, précisément, l'engagement par encliquetage (51, 52) est désarmé et, ainsi, un accouplement (17) et un désaccouplement (17') de la poignée (20) sont possibles, mais la position de montage (42.1) du bras de palier (42) dans le support (40) est fixée.

9. Ensemble selon la revendication 8, **caractérisé en ce que** le bras de palier (42) comprend un logement taraudé (38), pour une vis de réglage (35) servant d'obstacle (37),
et **en ce qu'**une extrémité de vis (34) sert d'actionnement en vissage et est accessible en position de montage (42.1) depuis le trou (15) ménagé dans la feuillure de portière (14).

10. Ensemble selon la revendication 9, **caractérisé en ce que** la vis de réglage (35) présente un premier tronçon de vis (36),
qui, en une première position de vissage, caractérisant la position de déblocage (37.1), coopère avec une saillie (26) située sur le support (40) et fixe ainsi la position de montage (42.1) du bras de palier (42),
et **en ce que** la vis de réglage (35) comprend un deuxième tronçon de vis (37),
qui, en une deuxième position de vissage, déterminant la position de blocage (35.2), pénètre dans la course de déplacement (55) de l'organe d'encliquetage ou du coulisseau (50) et assure l'accouplement (23, 43) de la poignée (20) et du bras de palier (42).

11. Ensemble selon la revendication 10, **caractérisé en ce que** le bras de palier (42) est sollicité par une force, dans la direction d'un déplacement d'accostage par rabattement de la poignée (20) sur l'habillage extérieur de portière (13),
**en ce que** la saillie (26) est formée d'une tête formant crochet (37), munie d'une dépouille orientée en direction inverse du mouvement d'accostage par rabattement,
et **en ce que** le premier tronçon de vis (36), à la première position de glissage (35.1) de la vis de réglage (35), saisit par l'arrière la contre-dépouille (26) et détermine la position de montage (42.1) du bras de palier (42).

12. Ensemble selon l'une des revendications 1 à 11, **caractérisé en ce que** le point d'actionnement de l'obstacle ou de l'extrémité d'actionnement (34) de la vis de réglage (35) n'est accessible qu'à la position de montage (42.1) du bras de palier (42), depuis le trou (15) ménagé dans la feuillure de portière (14).

13. Ensemble selon l'une des revendications 1 à 12, **caractérisé en ce que**, à la poignée (20), dans la zone de manipulation (21), est associée une coque d'auge (30) qui, en cas de fixation, est placée sur la face extérieure de portière (11) et est ancrée dans le support (40),
**en ce que** la poignée (20), certes, forme avec la coque d'auge (30) un ensemble (10) pré-monté, mais est mobile par rapport à la coque d'auge (30), fixée sur le support (40), de la poignée (20), lors de son actionnement,
**en ce que** la poignée (20) avec la coque d'auge (30) comprend un point de tourillonnement (32) dans l'ensemble (10),
et **en ce que** ce point de tourillonnement (32) situé côté auge se trouve sur l'extrémité de poignée (25), opposée par rapport au point de tourillonnement (41) situé bras de palier.

14. Ensemble selon la revendication 12, **caractérisé en ce que** la coque d'auge (30) comprend un recouvrement (31) pour un cylindre de fermeture, logé (46) dans un support (40).
